# EUROPEAN PATENT APPLICATION

(11) **EP 4 729 737 A1**
(43) Date of publication of application: **22.04.2026**
(21) Application number: 25206747.5
(22) Date of filing: 05.10.2025
(51) Int. Cl.: E05F 3/00

(54) **ADAPTIVE ELECTROMAGNETIC DAMPING FOR STORAGE COMPARTMENT**

(30) Priority: 15.10.2024 US 202418916154
(71) Applicant: Tesla, Inc., Austin, TX 78725 (US)
(72) Inventor: TRIVEDI, Shail, Austin, Texas 78725 (US); DE FUSCO, Adriano, Austin, Texas 78725 (US)
(74) Representative: Bryn-Jacobsen, Caelia

(57) **Abstract**

A magnetic closure system has a biasing apparatus to apply a closing force to a movable member to bias the movable member toward a closed position. An electromagnet applies a damping force opposing the closing force, the damping force having a magnitude based on a magnitude of the electrical stimulus. A sensor generates position information indicative of a position of the movable member. A controller applies the electrical stimulus to the electromagnet based on the position information to decelerate the movable member before the movable member reaches the closed position. The biasing apparatus can be a permanent magnet having first magnetic field that attenuates over a shorter distance than a second magnetic field generated by the electromagnet. The sensor can be a potentiometer or a mechanical switch. The controller can modulate the electrical stimulus based on a configurable damping profile.

## Description

### TECHNICAL FIELD

The present disclosure generally relates to closure systems and more particularly to electromagnetic closure systems for cabinets or storage compartments.

### BACKGROUND

Magnetic closure systems are used in various applications to provide secure latching without visible mechanisms. Typically, these systems rely on permanent magnets or simple electromagnets to create attractive forces between two surfaces.

### BRIEF SUMMARY

Magnetic closure systems often suffer from limitations such as excessive closure noise, wear from repeated impacts, and difficulty in providing satisfying haptic feedback to users. Some attempts have been made to mitigate these problems by adding dampening materials such as foams or overmolds, but these approaches introduce additional challenges including reduced latching force, visible wear or deformation after use, and susceptibility to environmental factors and compression through repeated use leading to decreased effectiveness over time.

Examples described herein leverage advanced control systems to manipulate electromagnetic fields to achieve both functional and experiential improvements in magnetic closure systems. The techniques described herein can be applied to magnetic closures for doors, lids, and other securable members used in stationary containers, buildings, personal items, vehicles, and elsewhere. Some examples are described in the context of a storage compartment for a vehicle interior, such as a glove compartment, having a movable door or closing panel.

In some examples, an adaptive electromagnetic damping system for storage compartments is provided. In one example, the system utilizes an electromagnet mounted on the fixed frame of a storage compartment, working in conjunction with a permanent magnet on the movable door or panel used to close the compartment. This configuration allows for dynamic control of the magnetic field interactions during the closure process. By activating the electromagnet at specific times and intensities, the system can provide a controlled damping force to decelerate the closing motion of the panel, significantly reducing noise and impact forces while maintaining a strong final latching force.

Various examples offer different control strategies and user experiences. Some examples employ a potentiometer for continuous position sensing, enabling precise control of the electromagnet's duty cycle through an ADSR (Attack, Decay, Sustain, Release) envelope. This approach can achieve an ultra-smooth, "zero force" closure feel by precisely matching and counteracting the permanent magnet's force profile. Some examples utilize a simpler switch-based activation, in which the electromagnet engages at a constant duty cycle when the door reaches a specific position. This approach can be used to provide a "hump" latch feel, emulating the haptic experience of closing a frictionless mechanical latch, through the natural superposition of magnetic fields. Various of the described examples address one or more technical problems associated with magnetic closure systems by providing improved wear prevention and/or improved user experience relative to traditional mechanical latching systems, while maintaining a clean, visible-mechanism-free appearance.

### BRIEF DESCRIPTION OF THE DRAWINGS

To easily identify the discussion of any particular element or act, the most significant digit or digits in a reference number refer to the figure number in which that element is first introduced.
FIG. 1 is a system diagram of a magnetic closure system implemented in a vehicle, according to some examples.
FIG. 2 is a flowchart showing operations of a method for operating a magnetic closure system, according to some examples.
FIG. 3 is a graph of the distance between members of a magnetic closure system against the net closing force applied at that distance, showing graphs of the undamped closing force and of a desired damped closing force to be achieved by an example magnetic closure system, according to some examples.
FIG. 4 is a graph of the damping force applied by an electromagnet of a magnetic closure system during each of four phases of a damping profile, according to some examples.
FIG. 5 is a second graph of the distance between members of a magnetic closure system against the net closing force applied at that distance, showing graphs of the undamped closing force, a damping force, and a desired damped closing force to be achieved by a second example magnetic closure system, according to some examples.

### DETAILED DESCRIPTION

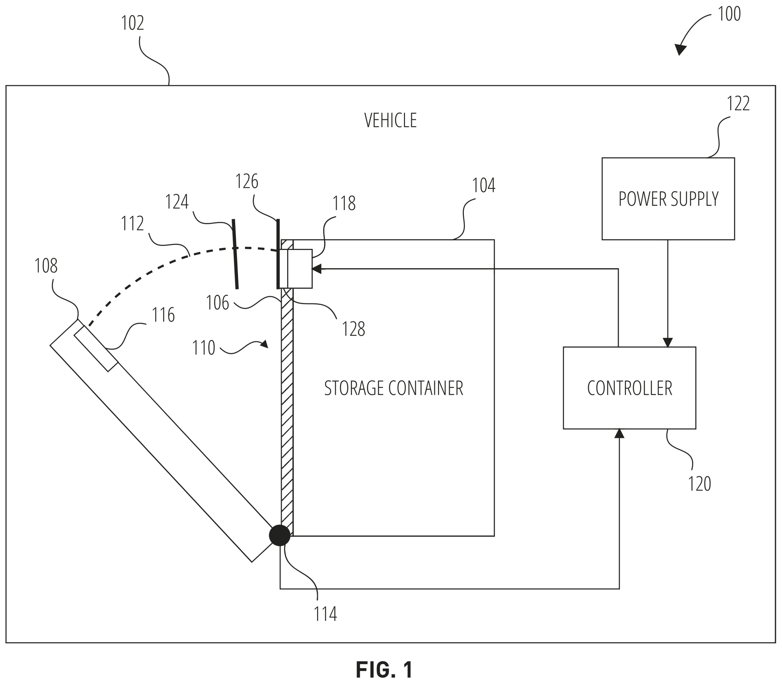

FIG. 1 shows an example of a magnetic closure system 100 implemented in a vehicle 102. The magnetic closure system 100 comprises a storage container 104 with a stationary member 106 and a movable member 108. The movable member 108 can rotate about a hinge 114 to close or cover an opening 110 of the storage container 104, moving along the line of movement 112.

The magnetic closure system 100 includes a biasing apparatus, represented by a permanent magnet 116 mounted on the movable member 108. This permanent magnet 116 applies a closing force to the movable member 108, biasing it toward a closed position 126 where it contacts the stationary member 106. The closing force in this example is provided by magnetic attraction between the permanent magnet 116 and a ferromagnetic metal strike plate 128 surrounding at least a portion of the opening 110 of the storage container 104: the stationary member 106 in this example can be regarded as being or including the strike plate 128, or as the storage container 104 as a whole. Suitable materials for the strike plate 128 can include iron, steel, or other ferromagnetic materials.

The permanent magnet 116 provides a reliable latching mechanism that maintains closure even without power, thereby providing a fail-safe feature that maintains the closed state of the storage container 104 even in the event of power failure, and that does not require expenditure of power to maintain its closed state.

An electromagnet 118 is mounted on the stationary member 106 and is configured to apply a damping force to reduce the velocity of contact between the movable member 108 and the stationary member 106. As described above, high-velocity impact between the movable member 108 and the stationary member 106 can generate unwanted noise, wear, vibration, and/or other effects, particularly when the surfaces contacting each other are a magnet and a metal strike plate 128. When undamped, the closing force applied to the movable member 108 by the permanent magnet 116 can accelerate the movable member 108 to undesired speeds before contact. If a user applies too much force in rotating the movable member 108 toward the closed position 126, this can further aggravate the problem of excess velocity at contact. Thus, the electromagnet 118 can be controlled to apply a damping force (in this case, a repulsive force between the permanent magnet 116 and the electromagnet 118, and therefore between the stationary member 106 and movable member 108) to decelerate the movable member 108 before it reaches the closed position 126, thereby reducing impact forces and/or noise. When activated by an electrical stimulus, the electromagnet 118 generates a magnetic field that interacts with the permanent magnet 116 to create a repulsive force, effectively damping the closing motion of the movable member 108.

The magnitude of this damping force can be controlled by adjusting the magnitude of the electrical stimulus applied to the electromagnet 118. Effective control of the electrical stimulus is performed in this example by a controller 120 coupled to a power supply 122 and a sensor (e.g., a potentiometer or a mechanical switch incorporated into the hinge 114).

The sensor can be any suitable sensor capable of generating position information indicative of the position of the movable member 108 relative to the closed position 126. In some examples, the sensor can be incorporated into or otherwise coupled to the hinge 114 in order to determine an angular position of the movable member 108 (such as along the arc of movement 112). In some examples, the sensor can use other means to determine a linear position of the movable member, such as a linear motion potentiometer coupled to a sliding drawer or other movable member. In some examples, a proximity sensor can be used, such as a Hall effect sensor, an ultrasound sensor, or an optical sensor. It will be appreciated that various types of sensors can be used to generate information regarding a location of a movable member relative to a stationary member. Some examples can use sensing of induced electromotive force (EMF) into the electromagnet 118 from the permanent magnet 116 approaching the electromagnet 118 as a proximity sensor.

Examples using a potentiometer as the sensor can be configured to provide continuous position data throughout the range of motion (e.g., a continuous range of positions along the path of movement 112). In some examples, a potentiometer or other sensor configuration (such as multiple switch sensors) can thereby enable sensing more than two possible positions of the movable member 108. For example, a window can be defined along the path of movement 112 in which the electromagnet 118 is able to, or is configured to, affect the forces acting on the movable member 108. The sensor or sensors can be used to sense multiple possible positions of the movable member 108 within this window, such as three or more possible positions. In some examples, the number of possible positions that can be sensed within the window (or along the path of movement 112 more generally) may be defined or affected by the resolution of the sensor or sensors being used, such as the resolution of a potentiometer. Examples using a mechanical switch as the sensor can activate the mechanical switch when the movable member 108 is within a specific distance from the closed position 126, referred to as a switch distance. In some examples, the electromagnet 118 can be activated to apply the damping force to the movable member 108 only when the movable member 108 is within a predetermined distance of the closed position 126, such as within a damping distance 124 shown in FIG. 1. The damping distance 124 can be considered to be the linear, angular, or other distance between the line in FIG. 1 showing the closed position 126 and the line showing the damping distance 124. In some examples, the electromagnet 118 can also be deactivated when the movable member 108 moves farther away from the closed position 126 than the damping distance 124.

In some examples using a mechanical switch, the damping distance 124 is equal to the switch distance, such that the electromagnet 118 is activated when the mechanical switch is activated. In some such examples, the electromagnet 118 can also be deactivated when the mechanical switch is deactivated by movement of the movable member 108 farther from the closed position 126 than the damping distance 124.

A controller 120 is used to control the supply of the electrical stimulus to the electromagnet 118. In the illustrated example, the controller 120 can be a controller that is integrated into one or more systems of the vehicle 102, such as a circuit, microcontroller, or computing device configured to control vehicle functions. In various examples, the controller 120 can be implemented by one or more devices providing hardware and/or software logic, such as an application specific integrated circuit (ASIC) or a computing system having one or more processors and one or more memories storing machine-executable instructions. In some examples, the controller 120 executes instructions (such as firmware) that can be changed or reconfigured based on configuration information, such as user input and/or software updates received over a communication link, to alter the behavior of the controller 120 in controlling the magnetic closure system 100.

A power supply 122 provides the necessary electrical power for the operation of the magnetic closure system 100, including the electromagnet 118 and the controller 120. In some examples, the power supply 122 is a power supply of the vehicle 102, such as the vehicle's electrical system. In some examples, the vehicle 102 is an electrical vehicle that includes one or more batteries and one or more generators. In various examples, the power supply 122 can include a battery or other electrical power storage means, a generator, and/or a supply of electrical power from another source, such as long-range transmission lines. The magnitude of the damping force applied by the electromagnet 118 to the movable member 108 can be based on a magnitude of the electrical stimulus. For example, a current or voltage duty cycle of the electromagnet 118 can be varied between 0% and 100%, or a current or voltage magnitude of the electrical stimulus can be modulated directly, thereby modulating the magnitude of the strength of the electrical field generated by the electromagnet 118. Each of these approaches can be regarded as a different way to modulate the magnitude of the electrical stimulus. The magnitude of the damping force applied to the movable member 108 at any given time by the magnetic field generated by the electromagnet 118 is a function not only of the magnitude of the electrical stimulus, but also of the position of the movable member 108, as well as possibly other factors (such as interference affecting the strength of the magnetic field at one or more locations).

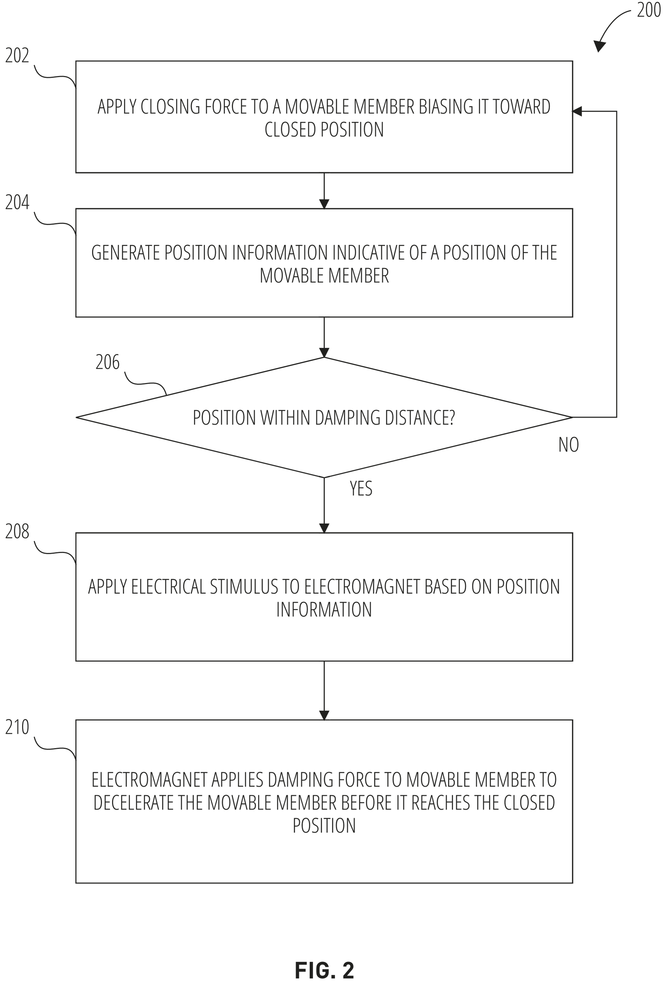

The controller 120 is configured to apply the electrical stimulus (supplied by the power supply 122) to the electromagnet 118 based on the position information from the sensor. The magnitude of the electrical stimulus can be modulated by the controller 120 based on various factors, including the position information received from the sensor, time information associated with the position information, and other factors that may be relevant to the performance of the magnetic closure system 100, such as the temperature of various components, the age of various components, the voltage of the battery, past performance data, the roughness of the current road conditions, the configuration of the vehicle's suspension, user preferences, and so on. Various approaches to controlling the electromagnet 118 are described below with reference to method 200 of FIG. 2. The controller 120 implements one or more control schemes for controlling the electromagnet 118 based on the position information. In some examples, the control scheme implemented by the controller 120 is reconfigurable, as described above. In some examples, the control scheme implements a damping profile to be applied to the electrical stimulus and thus to the electromagnet 118, based on the position information and optionally other information, such as time information. Examples of control schemes described herein include an attack-decay-sustain-release (ADSR) envelope approach, which can be used with a potentiometer, or a constant duty cycle applied to the electromagnet 118 when the movable member 108 is within the damping distance 124, which can be used with a mechanical switch or another type of sensor. In some examples, as described in greater detail below with reference to FIG. 2, the control scheme can be updated dynamically, such as via wirelessly-received software updates.

In some examples, when the movable member 108 is in the closed position 126, the permanent magnet 116 provides the primary latching force maintaining the closure of the storage container 104. In some examples, the latching force can be further enhanced by the electromagnet 118 if additional holding force is required. As described in greater detail below, some examples deactivate the electromagnet 118 after closure is achieved, and/or after a timeout interval has passed after the movable member 108 passes within the damping distance 124 of the closed position 126.

It will be appreciated that techniques described herein can be applied to other movable members and/or different trajectories of movement than those illustrated, such as linear movement (e.g., of a sliding drawer). In some examples, the movable member and stationary member can be objects that perform functions other than opening or closing a container. Whereas the example shown in FIG. 1 is implemented as a storage container in a vehicle 102, such as a glove compartment, it will be appreciated that some examples can be used outside of the context of a vehicle, such as container covers, doors, or other moving parts that come into contact with other parts in contexts such as building design, building fixtures, outdoor containers, personal items, and so on.

In some examples, a biasing apparatus can be used to apply the closing force to the movable member 108 that uses elements or features other than a permanent magnet 116, or that uses more than one permanent magnet. For example, the permanent magnet 116 can be replaced or supplemented with a weight or counterweight feature whereby the movable member 108 is biased toward the closed position 126 by gravity for at least a portion of its movement 112. Examples of such gravity-biasing features include a lid that swings downward onto an upward-facing opening; a rotating cover that includes a counterweight pulling the bottom end of the cover downward to cause the top end to contact the stationary member 106; a sliding drawer that is inclined on a track to slide downhill toward the closed position 126; and so on. Other examples of a biasing apparatus include spring-based mechanisms that rely on an elastic member that generates the closing force when extended or compressed.

The damping distance 124 and/or the switch distance can be set at distances suitable for operation of magnetic attraction between ferromagnetic components, such as distances no more than a few inches. In some examples, the damping distance 124 is approximately one inch. In some examples, the damping distance 124 can be set in accordance with the strength of the electromagnet 118: for example, the damping distance 124 can be set at a distance where the attractive and/or repulsive force applied by the electromagnet 118 is negligible, such as 0.05% of its maximum force. In some examples, the damping distance 124 can be a distance of between 1 cm and 10 cm, or between 3 cm and 20 cm. In some examples, the damping distance 124 can be a distance at which the electromagnet 118 applies less than a threshold proportion of its maximum force, such as between 0.01% and 5% of its maximum force, or between 0.1% and 10% of its maximum force.

Thus, various examples described herein provide a magnetic closure system including a biasing apparatus used to apply a closing force to a movable member. The closing force biases the movable member toward a closed position in which the movable member is in contact with, or in proximity to, a stationary member. An electromagnet is configured to, in response to an electrical stimulus, apply a damping force opposing the closing force, where the damping force has a magnitude based at least in part on a magnitude of the electrical stimulus. In some examples, the electromagnet may also be configured to apply an attractive force in some circumstances, in order to better control the speed at which the movable member approaches the closed position and/or increase the force maintaining the movable member in the closed position.

A sensor is configured to generate position information indicative of a position of the movable member. A controller is configured to apply the electrical stimulus to the electromagnet based on the position information to decelerate the movable member before the movable member reaches the closed position.

In some examples, the biasing apparatus includes a permanent magnet. In some examples, the movable member is a door or cover of a storage compartment, the stationary member is an opening of the storage compartment, and the movable member is configured to rotate to the closed position. In some examples, the sensor is or includes a potentiometer, and the position information is indicative of the position of the movable member within a continuous range of positions. In some examples, the sensor is or includes a mechanical switch, and the position information is indicative of whether the movable member is within a switch distance of the closed position.

In some examples, the system includes a vehicle. The storage compartment is a storage compartment of a vehicle, the electrical stimulus is supplied by an electrical system of the vehicle, and the controller is a controller of the vehicle.

In some examples, the sensor includes a mechanical switch, the position information is indicative of whether the movable member is within a switch distance of the closed position, and the damping distance is the switch distance.

FIG. 2 illustrates a flowchart of a method 200 for operating a magnetic closure system, such as magnetic closure system 100. Whereas the operations of method 200 may be described below with reference to the elements of the magnetic closure system 100 shown in FIG. 1, it will be appreciated that the method 200 can be applied to various different examples of magnetic closure systems.

Although the example method 200 depicts a particular sequence of operations, the sequence may be altered without departing from the scope of the present disclosure. For example, some of the operations depicted may be performed in parallel or in a different sequence that does not materially affect the function of the method 200. In other examples, different components of an example device or system that implements the method 200 may perform functions at substantially the same time or in a specific sequence.

According to some examples, the method 200 includes applying a closing force to a movable member 108 biasing it toward a closed position 126 at operation 202. Operation 202 can be performed by any suitable biasing apparatus, such as those described above. In some examples, operation 202 is passive: the biasing apparatus applies the closing force without the need for activation or stimulation. For example, a permanent magnet 116 can be used to passively apply a closing force to the movable member 108, the strength of the magnetic field generated by the permanent magnet 116 acting on the movable member 108 varying as a function of the position of the movable member 108.

Th closing force continuously biases the movable member 108 toward the closed position 126, where it contacts the stationary member 106. In some examples, the closing force is primarily generated by the magnetic attraction between the permanent magnet 116 on the movable member 108 and the metal strike plate 128 on the stationary member 106. This passive biasing force can help to ensure that the storage container 104 remains securely closed when not in use without the need for electrical power and also provides a fail-safe latching mechanism in case of power loss to the system.

According to some examples, the method 200 includes using a sensor to generate position information indicative of a position of the movable member 108 at operation 204. The sensor (such as a potentiometer or mechanical switch) generates position information that indicates the current position of the movable member 108 relative to the closed position 126. In some examples, the position information is binary: for example, the mechanical switch may generate a binary electrical signal (e.g., low or high voltage) that indicates whether the movable member 108 is within the switch distance (e.g., the damping distance 124) or not. While potentially less granular than the position information generated by a potentiometer, the use of a mechanical switch can enable a simpler and more straightforward implementation of a magnetic closure system. In other examples, the sensor (such as a rotational or linear potentiometer) can generate position information that provides more detail regarding the position of the movable member 108, such as indicating a position of the movable member 108 within a continuous range of positions (e.g., the range between a fully opened position and the closed position 126 along the range of movement 112). The use of a potentiometer or similar continuous-value position sensor allows for precise tracking of both position and velocity, potentially enabling more complex control strategies for a magnetic closure system.

According to some examples, the method 200 includes determining, by the controller 120, whether the position of the movable member 108 is within the damping distance 124 of the closed position 126 at operation 206. The controller 120 processes the position information to determine whether the movable member 108 has entered the damping distance 124, where active control (e.g., damping) of the closing motion should begin. The specific damping distance can vary in different examples and different configurations of the damping profile, and can be tuned based on factors such as the strength of the permanent magnet 116, the desired user experience, and the specific storage container 104 design.

If the movable member 108 is not determined to be within the damping distance 124 at operation 206, the method 200 loops back to operation 202 (or operation 204), continuing to passively apply the closing force and monitor the position of the movable member 108 without activating the electromagnet 118. This ensures that the system only engages when necessary, conserving power and preventing premature interference with the closing motion. In some examples, in order to further conserve power, the determination of whether the movable member 108 is within the damping distance 124 is a passive operation that does not consume power: for example, an electrical circuit may closed by the mechanical switch or by the permanent magnet only when the movable member 108 is within the damping distance 124, with the switch remaining open and therefore not consuming power while the movable member 108 is not within the damping distance 124.

If the movable member 108 is determined to be within the damping distance 124, the method 200 proceeds to operation 208.

According to some examples, the method 200 includes applying the electrical stimulus to the electromagnet 118 based on the position information at operation 208.

In some examples, the determination at operation 206 and application of electrical stimulus at operation 208 can be as simple as a high-voltage signal from a mechanical switch activating a controller circuit to open a switch between the power supply 122 and the electromagnet 118 to enable a constant duty cycle of the electromagnet 118. In some examples, the determination at operation 206 and application of electrical stimulus at operation 208 involve a processor of the controller 120 executing configurable software (e.g., firmware) instructions to track the position and velocity of the movable member 108 based on continuous position information generated by a potentiometer, and (at operation 208 below) applying a complex damping profile to the electrical stimulus applied to the electromagnet 118 in order to control the velocity of the movable member 108 over time as it approaches the closed position 126 and passes within the damping distance 124. It will be appreciated that various examples can perform the determination of operation 206 and the application of electrical stimulus at operation 208 using varying degrees of complex processing of various types of position information.

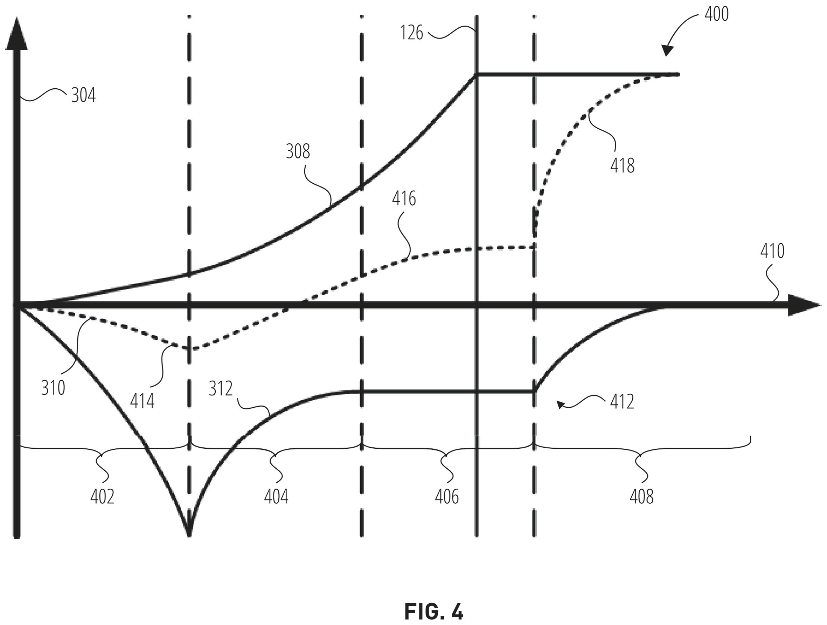

Thus, in some examples, once the movable member 108 is within the damping distance 124, the controller 120 begins applying the electrical stimulus to the electromagnet 118. The characteristics of the electrical stimulus can be determined based on the position information generated at operation 204 and the chosen control strategy. The controller 120 may also incorporate additional factors into the electrical stimulus calculation, such as the velocity of the movable member 108 (derived from position data over time) or predefined damping profiles that can be updated via firmware. An example of a damping profile is described below with reference to FIG. 4.

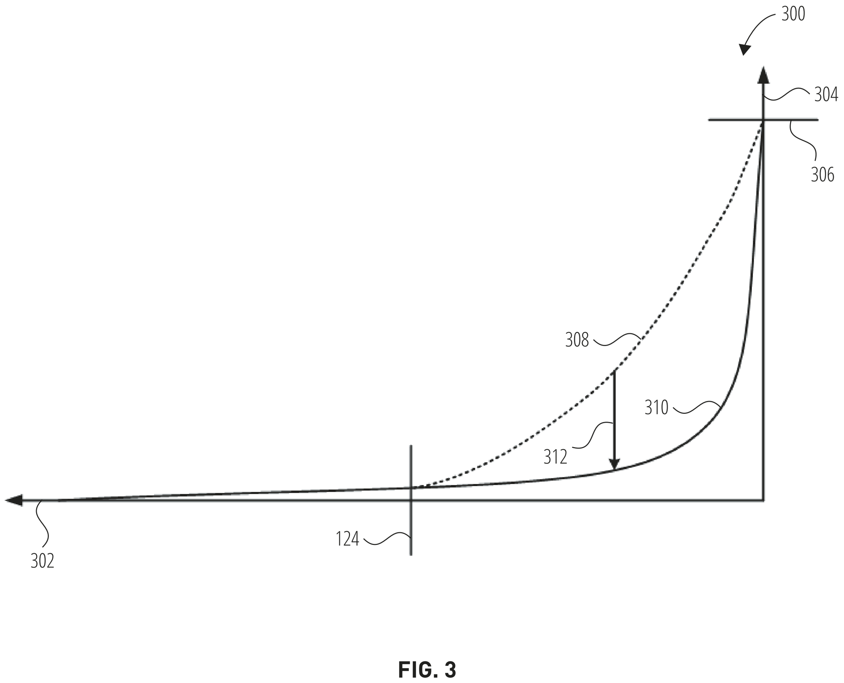

According to some examples, the method 200 includes applying, by the electromagnet 118, a damping force to the movable member 108 to decelerate the movable member 108 before it reaches the closed position 126, at operation 210. Stimulation by the electrical stimulus causes the electromagnet 118 to generate a magnetic field that interacts with the permanent magnet 116 on the movable member 108 to repel the movable member 108 from the stationary member 106. This interaction creates a damping force that opposes the closing motion, effectively decelerating the movable member 108 as it approaches the closed position 126. In some examples, the damping force at least partially offsets one or more attractive forces causing the movable member 108 to accelerate toward the closed position 126, such as the magnetic field of the permanent magnet 116, an attractive force of another biasing apparatus, force applied by a user actively closing the storage container 104, and so on. An example of the net force acting on a movable member as implemented by systems and methods described herein is described with reference to FIG. 3.

As described above, the damping force serves several purposes. By slowing the movable member 108 before impact, the damping force can reduce closure noise, especially high-frequency sounds associated with undamped magnetic or mechanical latches. The controlled deceleration can also reduce impact forces, reducing wear on both the movable member 108 and the stationary member 106 over time. The damping action can also be used to create a premium feel or haptic experience for users; the damping profile can be tuned, selected, or dynamically configured based on received configuration information to emulate various closure experiences, from a smooth, effortless motion to a more tactile "hump" sensation reminiscent of high-quality mechanical latches.

In some examples, the method 200 can include a further operation (not shown) in which, as the movable member 108 reaches the closed position 126, the electromagnet 118 is deactivated or its force reduced, allowing the permanent magnet 116 to provide the final latching force. This can enable a secure closure while minimizing power consumption in the steady state.

The method 200 may also include additional operations not shown in FIG. 2, such as monitoring for prolonged partial closure. For example, the electromagnet 118 can be deactivated after a timeout interval (such as 5 seconds) if full closure is not achieved. In some examples, such as some mechanical switch implementations, the electromagnet 118 is deactivated after the timeout interval passes and the movable member 108 remains within the damping distance 124, regardless of whether full closure has been achieved. This can prevent unnecessary power consumption in circumstances involving obstruction of full closure or any other failure (or inability) of the sensor to register full closure. In some examples, more complex processes can be used to select, generate, or modify the damping profile applied by the controller 120, such as the use of adaptive learning algorithms to optimize performance based on usage patterns.

Thus, in some examples, the controller 120 is configured to apply an electrical stimulus to the electromagnet in response to determining, based on the position information, that the movable member is within a damping distance of the closed position. The controller can also be configured to cease applying the electrical stimulus to the electromagnet in response to determining, based on the position information, that the movable member has remained within the damping distance of the closed position for greater than a timeout interval of time.

In some examples, the controller is configured to modulate the magnitude of the electrical stimulus based on the position information based on a damping profile. The controller can also be configured to change the damping profile in response to receiving configuration information.

FIG. 3 is a graph 300 depicting the force profiles involved in a magnetic closure system, such as magnetic closure system 100. The graph 300 provides a visual representation of how the various forces interact during the closure process of the movable member 108.

The x-axis of the graph 300 represents the distance 302, which indicates the position of the movable member 108 relative to the closed position 126. The damping distance 124 is shown on this axis, marking the range within which the electromagnet 118 actively influences the closing motion.

The y-axis represents force 304, which is the force acting on the movable member 108 during the closure process. The maximum net closing force 306 indicates the peak net force experienced during closure; in this example, the maximum net closing force 306 is applied to the movable member 108 as it comes very close to the closed position 126, as a result of the magnetic field of the permanent magnet 116 exerting a maximum attractive force between the permanent magnet 116 of the movable member 108 and the metal strike plate 128 of the stationary member 106.

The undamped closing force 308 represents the force profile that would exist in a purely passive magnetic closure system without the electromagnetic damping system described herein. This force is primarily generated by the permanent magnet 116 and increases exponentially as the movable member 108 approaches the closed position 126.

The net closing force 310 illustrates an example of a force profile that the system aims to achieve. This profile is designed to provide a smooth, controlled closure experience while still ensuring secure latching. The simplified example shown in FIG. 3 is intended to illustrate a straightforward flattening or partial negation of the attractive force applied by the permanent magnet 116. A more extreme example could be illustrated in which the net closing force 310 is equal to zero at all distances 302, as a result of the electromagnet 118 applying a magnetic field that exactly negates the passive magnetic field of the permanent magnet 116.

The damping force 312, visualized as a difference between the undamped closing force 308 and the net closing force 310, corresponds to the repulsive damping force applied by the electromagnet 118 to counteract the undamped closing force 308. This force is dynamically adjusted based on the position information and by the control scheme or damping profile implemented by the controller 120.

The interplay between these forces demonstrates how the system can effectively control the closure process, reducing impact forces and noise while maintaining a secure latch. By modulating the damping force 312, the system can closely approximate the net closing force 310, providing a premium user experience and minimizing wear on the components.

In some examples, the damping force 312 can be applied effectively at a greater distance than the closing force, to allow the electromagnet 118 to decelerate the movable member 108 even before the permanent magnet 116 begins applying its closing force. For example, one can consider a ratio of the magnitude of the damping force 312 applied to the movable member 108 to a magnitude of the closing force applied to the movable member 108: in some examples, this ratio is greater at a first position of the movable member 108 than at a second position of the movable member 108, where the first position (e.g., a position outside of the damping distance 124) is farther from the closed position than the second position (e.g., a position inside the damping distance 124). In some examples, this greater range of the damping force 312 than the closing force can be achieved by using a permanent magnet 116 that generates a first magnetic field that attenuates over a shorter distance than a second magnetic field generated by the electromagnet 118. This allows examples using a constant duty-cycle for the electromagnet 118 (e.g., some mechanical switch implementations) to apply the damping force 312 more effectively at longer distances than at shorter distances. This can cause the movable member 108 to resist closure when first entering within the damping distance 124, but to actively pull itself into the closed position 126 when very close to the closed position 126. This effect can be used to replicate the haptic feel and movement of closing a door with a mechanical latch, but without the accompanying sound.

In some examples, a desired net closing force 310 can be achieved using a mechanical switch for the sensor. When the movable member 108 passes within the closed position 126, the electromagnet 118 can be activated according to a constant duty cycle, such as a constant 40% duty cycle in which the electrical stimulus drives the electromagnet 118 40% of the time. This control scheme therefore applies a fixed-magnitude electrical stimulus when the movable member 108 enters the damping distance 124. The duty cycle can be chosen or changed to balance the effectiveness of damping with power consumption, among other considerations.

FIG. 4 is a graph 400 that provides a detailed representation of a damping profile 412 of the damping force 312 applied over time, showing an ADSR (Attack, Decay, Sustain, Release) envelope control strategy for a magnetic closure system, such as an example of the magnetic closure system 100 using a potentiometer as the sensor.

As in FIG. 3, the y-axis represents the magnitude of the force 304 applied to the movable member 108. The forces applied to the movable member 108 include the undamped closing force 308 applied by the permanent magnet 116 and the damping force 312 applied by the electromagnet 118 to counteract the closing force of the permanent magnet 116 (or other biasing apparatus). The sum of these forces is shown as the dashed line representing the net closing force 310.

The x-axis of the graph 400 represents time 410, showing the progression of the damping force 312 applied during the closure process of the movable member 108. The damping force 312 is applied in this example according to a time- and distance-varying damping profile 412.

It will be appreciated that the damping profile 412 applied over time 410, even by a single configuration of the controller 120, can vary depending on the circumstances. If the potentiometer detects that the closure motion of the movable member 108 has been accelerated, slowed, arrested, reversed, or otherwise perturbed, the controller 120 can react to this perturbation by varying the damping force 312 applied, thereby altering the damping profile 412. The example damping profile 412 shown in FIG. 4 represents a typical use case, in which the closure of the storage container 104 is performed in a typical fashion.

The damping profile 412 is the overall shape of the force curve, which has four distinct phases: an attack phase 402, a decay phase 404, a sustain phase 406, and a release phase 408. Over the course of the damping profile 412, the distance closes to zero, resulting in the same exponential increase in the undamped closing force 308 until the distance reaches zero at the closed position 126. Once the movable member 108 is at the closed position 126, the undamped closing force 308 remains at its maximum value, as shown by the plateau at the right end of the undamped closing force 308 graph.

The attack phase 402 represents the rapid engagement of the damping force 312 as the movable member 108 enters within the damping distance 124 of the closed position 126. During the attack phase 402, the electromagnet 118 quickly ramps up its force (to a high negative magnitude) to begin decelerating the movable member 108. The damping force 312 of the damping profile 412 applied by the electromagnet 118 ramps up quickly from zero (the electromagnet 118 being inactive) to a maximum repulsive value, shown as a negative value of force 304 (at which the electromagnet 118 is driven by a constant duty cycle, as described below). This ramping-up can be the result of a combination of factors: the magnitude of the electrical stimulus can be rapidly increased, while at the same time the distance 302 decreases, thereby increasing the damping force 312 between the electromagnet 118 and the permanent magnet 116. At the end of the attack phase 402, the highly negative damping force 312 summed with the relatively weak undamped closing force 308 results in a speed bump 414 phase of the net closing force 310 during which the momentum of the closing movable member 108 is damped or reduced by the dominance of the damping force 312.

During the decay phase 404, the damping force 312 of the damping profile 412 decays or falls back to an intermediate level, such as 50% of the maximum force applied during the attack phase 402. This decay reduces the damping force 312 to a steady intermediate strength to achieve a controlled offset of the closing force applied by the permanent magnet 116 to slow the velocity of the movable member 108 as it approaches the closed position 126 during the sustain phase 406. However, by the end of the decay phase 404, the undamped closing force 308 becomes dominant over the damping force 312, resulting in a pulling bias 416 phase of the net closing force 310 during which the movable member 108 is slightly biased toward the closed position by the net closing force 310.

The sustain phase 406 represents a period of relatively constant damping force application. During the sustain phase 406, the electromagnet 118 maintains a steady force (at the intermediate strength achieved at the end of the decay phase 404) to guide the movable member 108 through the majority of its closing motion. The sustain phase 406 helps to ensure a consistent feel throughout the closure process. The sustain phase 406 persists until after the movable member 108 reaches the fully closed position 126.

Finally, the release phase 408 shows a gradual tapering off of the damping force 312 as the movable member 108 approaches the closed position 126. This gentle reduction in force allows for a smooth transition to the final latching action, minimizing any potential for bounce-back or noise at the point of closure. The release phase 408 results in a net closing force 310 passing into a recovery 418 phase, during which the permanent magnet 116 becomes dominant and secures the storage container 104 at its maximum force.

The damping profile 412 illustrated in the graph 400 represents the implementation of an ADSR envelope control strategy, which can be used in conjunction with a potentiometer sensor for precise position feedback. In some examples, this control scheme allows for fine-tuning of each phase to achieve the desired closure characteristics, such as noise reduction, wear prevention, and enhanced user experience. By modulating the damping force 312 according to this profile, the system can closely approximate the desired closing force, providing a premium feel while effectively managing the closure dynamics of the storage compartment. Furthermore, the ability in some examples to adjust the parameters of each phase through firmware updates offers flexibility in optimizing the system's performance for different vehicle models or user preferences.

Thus, in some examples, the damping profile 412 includes four phases. In some examples, these phases can be initiated, ended, and/or altered based on characteristics of the position information. In some examples of an attack phase 402, a first magnitude of the damping force 312 is applied to the movable member 108 when the movable member 108 is determined to be moving toward the closed position 126 above a velocity threshold: for example, the maximum damping force 312 show in damping profile 412 can be applied to counteract velocity over a certain velocity threshold defined by the damping profile 412. In some examples of a sustain phase 406 following the attack phase 402, a second magnitude of the damping force 312, less than the first magnitude (e.g., 50% of the first magnitude), is applied to the movable member 108 when the movable member 108 is determined to be moving below the velocity threshold: thus, for example, the decay phase 404 can be initiated when the controller 120 determines that the movable member 108 has slowed below the velocity threshold. In a release phase 408 following the sustain phase 406, a third magnitude of the damping force 312, less than the second magnitude, is applied to the movable member 108 when the movable member 108 is determined to be in the closed position 126.

In some examples, the electromagnet 118 can also operate according to one or more opening profiles for assisting in moving the movable member 108 away from the closed position 126: for example, the electromagnet 118 can be used to automatically open the storage container 104 and/or control the trajectory with which the movable member 108 moves away from the closed position 126 while opening. In a first example opening profile, the electromagnet 118 neutralizes the closing force of the permanent magnet 116, allowing the movable member 108 to be opened without any magnetic forces acting upon it. In a second example opening profile, the electromagnet 118 applies repulsive force greater than the closing force during an initial phase when the movable member 108 is close to the closed position 126 (e.g., in order to actively push the door of the storage container 104 open), followed by an intermediate phase in which the electromagnet 118 neutralizes the closing force to allow the movable member 108 to fall open in accordance with gravity or other non-magnetic forces, finally followed by a slowing phase in which the electromagnet 118 applies an attractive force to slow the opening velocity of the movable member 108 before it comes to rest in a fully-open position defined by a mechanical stop; the final phase can serve a similar function to the damping behavior of the electromagnet 118 during closure, such as reducing noise, vibration, and wear on the mechanical components when the movable member 108 comes into contact with the mechanical stop at the fully-open position.

It will be appreciated that other damping profiles, other opening profiles, and other control schemes can be implemented in various examples and configurations of a magnetic closure system as described herein.

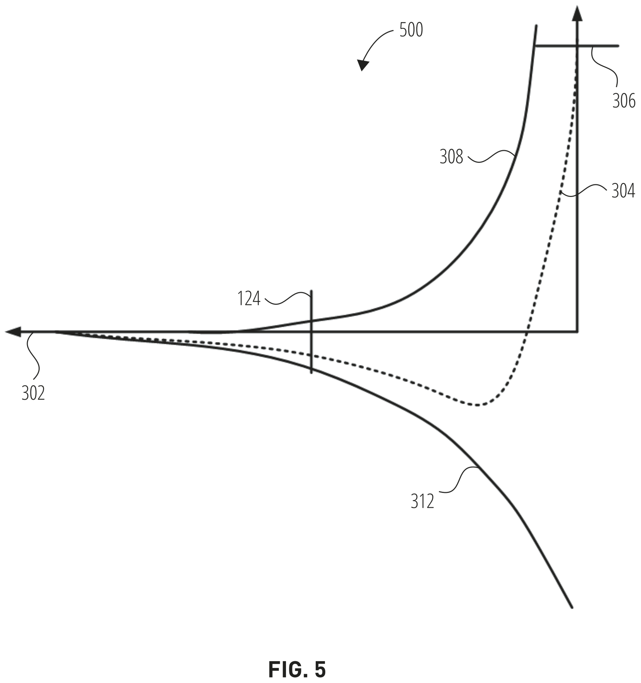

FIG. 5 shows a second alternative version of the net forces graph of FIG. 4, in which a constant duty cycle (e.g., a constant 40% duty cycle) is applied to the electromagnet 118 regardless of the position of the movable member 108. This second alternative example can reproduce the haptic experience of a mechanical latch, as described above.

When the distance 302 of the movable member 108 from the stationary member 106 is far, the repulsive force (shown as values of force below the horizontal distance 302 axis) of the electromagnet 118, shown as damping force 312, is slightly greater than the attractive of the permanent magnet 116, shown as undamped closing force 308. This results in a force 304 slightly below zero. As the distance 302 closes to below the damping distance 124, the strength of the damping force 312 further overpowers the undamped closing force 308, resulting in greater resistance (high magnitude negative force 304) as a user attempts to push the movable member 108 shut, much like a mechanical latch exerting a spring-based repulsive force against closure. However, as this repulsive force is overcome by the user's hand and the distance 302 closes to zero, the greater strength of the permanent magnet 116 at close range overcomes the strength of the electromagnet 118, resulting in a reversal of the direction of force 304, which rises above zero to the maximum net closing force 306 to pull the movable member 108 to the closed position for the final short distance (e.g., less than a centimeter). This final portion of the closing experience reproduces the feeling of a mechanical latch "clicking" shut and pulling the door or lid into the final closed position.

It will be appreciated that, given the low magnitude of the forces at the damping distance 124, a very similar experience and behavior can be reproduced in some examples by switching the electromagnet 118 to the constant duty cycle only when the movable member 108 comes within the damping distance 124 (e.g., detected using a mechanical switch, as described above).

The examples described herein may address one or more technical problems of magnetic closure systems. As described above, various of the described examples provide improved reduction of noise, vibration, and harshness (NVR), improved wear prevention, and/or improved user experience compared to traditional magnetic or mechanical latching systems, while maintaining a clean, visible-mechanism-free appearance and without the use of bulky mechanical damping systems such as pneumatic cylinders and pistons.

Thus, some embodiments may include one or more of the following examples.

Example 1 is a system, comprising: a biasing apparatus configured to apply a closing force to a movable member, the closing force biasing the movable member toward a closed position in which the movable member is in proximity to a stationary member; an electromagnet configured to, in response to an electrical stimulus, apply a damping force opposing the closing force, the damping force having a magnitude based on a magnitude of the electrical stimulus; a sensor configured to generate position information indicative of a position of the movable member; and a controller configured to apply the electrical stimulus to the electromagnet based on the position information to decelerate the movable member before the movable member reaches the closed position.

In Example 2, the subject matter of Example 1 includes, wherein: the biasing apparatus comprises a permanent magnet.

In Example 3, the subject matter of Examples 1-2 includes, wherein: the stationary member comprises a storage compartment defining an opening, the storage compartment having a door; the movable member comprises the door of the storage compartment; and wherein the movable member is configured to rotate to the closed position, the closed position comprising the movable member closing the opening of the storage compartment.

In Example 4, the subject matter of Example 3 includes, a vehicle comprising the storage compartment; wherein: the electrical stimulus is supplied by an electrical system of the vehicle; and the controller is a controller of the vehicle.

In Example 5, the subject matter of Examples 1-4 includes, wherein: the sensor comprises a potentiometer; and the position information is indicative of the position of the movable member as selected from more than two possible positions.

In Example 6, the subject matter of Example 5 includes, wherein: the controller is configured to modulate the magnitude of the electrical stimulus based on the position information according to a damping profile, the damping profile comprising: an attack phase comprising a first magnitude of the damping force applied to the movable member based on the movable member being determined to be moving toward the closed position above a velocity threshold; a sustain phase following the attack phase, comprising a second magnitude of the damping force, less than the first magnitude, applied to the movable member based on the movable member being determined to be moving below the velocity threshold; and a release phase following the sustain phase, comprising a third magnitude of the damping force, less than the second magnitude, applied to the movable member based on the movable member being determined to be in the closed position.

In Example 7, the subject matter of Examples 1-6 includes, wherein: the sensor comprises a mechanical switch; and the position information is indicative of whether the movable member is within a switch distance of the closed position.

In Example 8, the subject matter of Examples 1-7 includes, wherein: a ratio of the magnitude of the damping force applied to the movable member to a magnitude of the closing force applied to the movable member is greater at a first position of the movable member than at a second position of the movable member, the first position being farther from the closed position than the second position.

In Example 9, the subject matter of Example 8 includes, wherein: the biasing apparatus comprises a permanent magnet; and the permanent magnet generates a first magnetic field that attenuates over a shorter distance than a second magnetic field generated by the electromagnet.

In Example 10, the subject matter of Example 9 includes, wherein: the controller is configured to apply the electrical stimulus to the electromagnet in response to determining, based on the position information, that the movable member is within a damping distance of the closed position.

In Example 11, the subject matter of Example 10 includes, wherein: the controller is configured to cease applying the electrical stimulus to the electromagnet in response to determining, based on the position information, that the movable member has remained within the damping distance of the closed position for greater than a timeout interval of time.

In Example 12, the subject matter of Example 11 includes, wherein: the sensor comprises a mechanical switch; the position information is indicative of whether the movable member is within a switch distance of the closed position; and the damping distance is substantially equal to the switch distance.

In Example 13, the subject matter of Examples 1-12 includes, wherein: the controller is configured to modulate the magnitude of the electrical stimulus based on the position information based on a damping profile.

In Example 14, the subject matter of Example 13 includes, wherein: the controller is configured to change the damping profile in response to receiving configuration information.

Example 15 is a method, comprising: applying, by a biasing apparatus, a closing force to a movable member, the closing force biasing the movable member toward a closed position in which the movable member is in proximity to a stationary member; generating, by a sensor, position information indicative of a position of the movable member; and applying, by a controller, an electrical stimulus to an electromagnet based on the position information, the electromagnet applying a damping force opposing the closing force, the damping force having a magnitude based on a magnitude of the electrical stimulus, the damping force applied by the electromagnet decelerating the movable member before the movable member reaches the closed position.

In Example 16, the subject matter of Example 15 includes, wherein: the biasing apparatus comprises a permanent magnet; and the permanent magnet generates a first magnetic field that attenuates over a shorter distance than a second magnetic field generated by the electromagnet, such that a ratio of the magnitude of the damping force applied to the movable member to a magnitude of the closing force applied to the movable member is greater at a first position of the movable member than at a second position of the movable member, the first position being farther from the closed position than the second position.

In Example 17, the subject matter of Example 16 includes, wherein: the electrical stimulus is applied to the electromagnet in response to determining, based on the position information, that the movable member is within a damping distance of the closed position.

In Example 18, the subject matter of Example 17 includes, ceasing to apply the electrical stimulus to the electromagnet in response to determining, based on the position information, that the movable member has remained within the damping distance of the closed position for greater than a timeout interval of time.

In Example 19, the subject matter of Example 18 includes, wherein: the sensor comprises a mechanical switch; the position information is indicative of whether the movable member is within a switch distance of the closed position; and the damping distance is substantially equal to the switch distance.

Example 20 is a non-transitory computer-readable medium comprising instructions that, when executed by one or more processors of a system, cause the system to perform operations comprising: applying, by a biasing apparatus, a closing force to a movable member, the closing force biasing the movable member toward a closed position in which the movable member is in proximity to a stationary member; generating, by a sensor, position information indicative of a position of the movable member; and applying, by a controller, an electrical stimulus to an electromagnet based on the position information, the electromagnet applying a damping force opposing the closing force, the damping force having a magnitude based on a magnitude of the electrical stimulus, the damping force applied by the electromagnet decelerating the movable member before the movable member reaches the closed position.

Example 21 is at least one machine-readable medium including instructions that, when executed by processing circuitry, cause the processing circuitry to perform operations to implement of any of Examples 1-20.

Example 22 is an apparatus comprising means to implement of any of Examples 1-20.

Example 23 is a system to implement of any of Examples 1-20.

Example 24 is a method to implement of any of Examples 1-20.

Other technical features may be readily apparent to one skilled in the art from the figures, descriptions, and claims herein.

It should be noted that the description and the figures above merely illustrate the principles of the present subject matter along with examples described herein and should not be construed as a limitation to the present subject matter. It is thus understood that various arrangements may be devised that although not explicitly described or shown herein, embody the principles of the present subject matter. Moreover, all statements herein reciting principles, aspects, and implementations of the present subject matter, as well as specific examples thereof, are intended to encompass equivalents thereof.

It is to be understood that not necessarily all objects or advantages may be achieved in accordance with any particular example described herein. Thus, for example, those skilled in the art will recognize that some examples may be operated in a manner that achieves or optimizes one advantage or group of advantages as taught herein without necessarily achieving other objects or advantages as may be taught or suggested herein.

All of the processes described herein may be embodied in, and fully automated via, software code modules executed by a computing system that includes computers or processors. The code modules may be stored in any type of non-transitory computer-readable medium or other computer storage device. Some or all of the methods may be embodied in specialized computer hardware.

Many other variations than those described herein will be apparent from this disclosure. For example, depending on the example, some acts, events, or functions of any of the algorithms described herein can be performed in a different sequence, can be added, merged, or left out altogether (for example, not all described acts or events are necessary for the practice of the algorithms). Moreover, in some examples, acts or events can be performed concurrently, for example, through multi-threaded processing, interrupt processing, or multiple processors or processor cores, or on other parallel architectures, rather than sequentially. In addition, different tasks or processes can be performed by different machines and/or computing systems that can function together.

The various illustrative logical blocks and modules described in connection with the examples disclosed herein can be implemented or performed by a machine, such as a processing unit or processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A processor can be a microprocessor, but in the alternative, the processor can be a controller, microcontroller, or state machine, combination of the same, or the like. A processor can include electrical circuitry to process computer-executable instructions. In some examples, a processor includes an FPGA or other programmable device that performs logic operations without processing computer-executable instructions. A processor can also be implemented as a combination of computing devices, for example, a combination of a DSP and a microprocessor, a plurality of microprocessors, microprocessors in conjunction with a DSP core, or any other such configuration.

Although described herein primarily with respect to digital technology, a processor may also include primarily analog components. A computing environment can include any type of computer system, including, but not limited to, a computer system based on a microprocessor, a mainframe computer, a digital signal processor, a portable computing device, a device controller, or a computational engine within an appliance, to name a few. The elements of a method, process, routine, or algorithm described in connection with the examples disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

The processes described herein or illustrated in the figures of the present disclosure may begin in response to an event, such as on a predetermined or dynamically determined schedule, on demand when initiated by a user or system administrator, or in response to some other event. When such processes are initiated, a set of executable program instructions stored on one or more non-transitory computer-readable media (e.g., hard drive, flash memory, removable media, etc.) may be loaded into memory (e.g., RAM) of a server or other computing device. The executable instructions may then be executed by a hardware-based computer processor of the computing device. In some examples, such processes or portions thereof may be implemented on multiple computing devices and/or multiple processors, serially or in parallel.

Although the described flow diagrams herein can show operations as a sequential process, many of the operations can be performed in parallel or concurrently. In addition, the order of the operations may be re-arranged. A process is terminated when its operations are completed. A process may correspond to a method, a procedure, an algorithm, etc. The operations of methods may be performed in whole or in part, may be performed in conjunction with some or all of the operations in other methods, and may be performed by any number of different systems, such as the systems described herein, or any portion thereof, such as a processor included in any of the systems.

Conditional language such as, among others, "can," "could," "might" or "may," unless specifically stated otherwise, are otherwise understood within the context as used in general to convey that some examples include, while other examples do not include, some features, elements and/or steps. Thus, such conditional language is not generally intended to imply that features, elements and/or steps are in any way for examples or that examples necessarily include logic for deciding, with or without user input or prompting, whether these features, elements and/or steps are included or are to be performed in any particular example.

Disjunctive language such as the phrase "at least one of X, Y, or Z," unless specifically stated otherwise, is otherwise understood with the context as used in general to present that an item, term, etc., may be either X, Y, or Z, or any combination thereof (for example, X, Y, and/or Z). Thus, such disjunctive language is not generally intended to, and should not, imply that some examples require at least one of X, at least one of Y, or at least one of Z to each be present.

Any process descriptions, elements or blocks in the flow diagrams described herein and/or depicted in the attached figures should be understood as potentially representing modules, segments, or portions of code which include executable instructions for implementing specific logical functions or elements in the process. Alternate examples are included within the scope of the examples described herein in which elements or functions may be deleted, executed out of order from that shown, or discussed, including substantially, concurrently, or in reverse order, depending on the functionality involved as would be understood by those skilled in the art.

It should be emphasized that many variations and modifications may be made to the above-described examples, the elements of which are to be understood as being among other acceptable examples. All such modifications and variations are intended to be included herein within the scope of this disclosure.

Any process descriptions, elements or blocks in the flow diagrams described herein and/or depicted in the attached figures should be understood as potentially representing modules, segments, or portions of code which include executable instructions for implementing specific logical functions or elements in the process. Alternate implementations are included within the scope of the examples described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B, and C" can include a first processor configured to carry out recitation A working in conjunction with a second processor configured to carry out recitations B and C.

It will also be appreciated that one or more of the elements depicted in the drawings/figures can also be implemented in a more separated or integrated manner, or even removed or rendered as inoperable in certain cases, as is useful in accordance with a particular application.

"Client device" refers, for example, to any machine that interfaces to a communications network to obtain resources from one or more server systems or other client devices. A client device may be, but is not limited to, a mobile phone, desktop computer, laptop, portable digital assistants (PDAs), smartphones, tablets, ultrabooks, netbooks, laptops, multi-processor systems, microprocessor-based or programmable consumer electronics, game consoles, set-top boxes, or any other communication device that a user may use to access a network.

"Communication network" refers, for example, to one or more portions of a network that may be an ad hoc network, an intranet, an extranet, a virtual private network (VPN), a local area network (LAN), a wireless LAN (WLAN), a wide area network (WAN), a wireless WAN (WWAN), a metropolitan area network (MAN), the Internet, a portion of the Internet, a portion of the Public Switched Telephone Network (PSTN), a plain old telephone service (POTS) network, a cellular telephone network, a wireless network, a Wi-Fi^{®} network, another type of network, or a combination of two or more such networks. For example, a network or a portion of a network may include a wireless or cellular network, and the coupling may be a Code Division Multiple Access (CDMA) connection, a Global System for Mobile communications (GSM) connection, or other types of cellular or wireless coupling. In this example, the coupling may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth-generation wireless (4G) networks, Universal Mobile Telecommunications System (UMTS), High Speed Packet Access (HSPA), Worldwide Interoperability for Microwave Access (WiMAX), Long Term Evolution (LTE) standard, others defined by various standard-setting organizations, other long-range protocols, or other data transfer technology. The term "network", as used herein, shall refer to a communication network unless otherwise indicated.

"Component" refers, for example, to a device, physical entity, or logic having boundaries defined by function or subroutine calls, branch points, APIs, or other technologies that provide for the partitioning or modularization of particular processing or control functions. Components may be combined via their interfaces with other components to carry out a machine process. A component may be a packaged functional hardware unit designed for use with other components and a part of a program that usually performs a particular function of related functions. Components may constitute either software components (e.g., code embodied on a machine-readable medium) or hardware components. A "hardware component" is a tangible unit capable of performing certain operations and may be configured or arranged in a certain physical manner. In various examples, one or more computer systems (e.g., a standalone computer system, a client computer system, or a server computer system) or one or more hardware components of a computer system (e.g., a processor or a group of processors) may be configured by software (e.g., an application or application portion) as a hardware component that operates to perform certain operations as described herein. A hardware component may also be implemented mechanically, electronically, or any suitable combination thereof. For example, a hardware component may include dedicated circuitry or logic that is permanently configured to perform certain operations. A hardware component may be a special-purpose processor, such as a field-programmable gate array (FPGA) or an application-specific integrated circuit (ASIC). A hardware component may also include programmable logic or circuitry that is temporarily configured by software to perform certain operations. For example, a hardware component may include software executed by a general-purpose processor or other programmable processors. Once configured by such software, hardware components become specific machines (or specific components of a machine) uniquely tailored to perform the configured functions and are no longer general-purpose processors. It will be appreciated that the decision to implement a hardware component mechanically, in dedicated and permanently configured circuitry, or in temporarily configured circuitry (e.g., configured by software), may be driven by cost and time considerations. Accordingly, the phrase "hardware component"(or "hardware-implemented component") should be understood to encompass a tangible entity, be that an entity that is physically constructed, permanently configured (e.g., hardwired), or temporarily configured (e.g., programmed) to operate in a certain manner or to perform certain operations described herein. Considering examples in which hardware components are temporarily configured (e.g., programmed), each of the hardware components need not be configured or instantiated at any one instance in time. For example, where a hardware component comprises a general-purpose processor configured by software to become a special-purpose processor, the general-purpose processor may be configured as respectively different special-purpose processors (e.g., comprising different hardware components) at different times. Software accordingly configures a particular processor or processors, for example, to constitute a particular hardware component at one instance of time and to constitute a different hardware component at a different instance of time. Hardware components can provide information to, and receive information from, other hardware components. Accordingly, the described hardware components may be regarded as being communicatively coupled. Where multiple hardware components exist contemporaneously, communications may be achieved through signal transmission (e.g., over appropriate circuits and buses) between or among two or more of the hardware components. In examples in which multiple hardware components are configured or instantiated at different times, communications between such hardware components may be achieved, for example, through the storage and retrieval of information in memory structures to which the multiple hardware components have access. For example, one hardware component may perform an operation and store the output of that operation in a memory device to which it is communicatively coupled. A further hardware component may then, at a later time, access the memory device to retrieve and process the stored output. Hardware components may also initiate communications with input or output devices, and can operate on a resource (e.g., a collection of information). The various operations of example methods described herein may be performed, at least partially, by one or more processors that are temporarily configured (e.g., by software) or permanently configured to perform the relevant operations. Whether temporarily or permanently configured, such processors may constitute processor-implemented components that operate to perform one or more operations or functions described herein. As used herein, "processor-implemented component" refers to a hardware component implemented using one or more processors. Similarly, the methods described herein may be at least partially processor-implemented, with a particular processor or processors being an example of hardware. For example, at least some of the operations of a method may be performed by one or more processors or processor-implemented components. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an API). The performance of certain of the operations may be distributed among the processors, not only residing within a single machine, but deployed across a number of machines. In some examples, the processors or processor-implemented components may be located in a single geographic location (e.g., within a home environment, an office environment, or a server farm). In other examples, the processors or processor-implemented components may be distributed across a number of geographic locations.

"Computer-readable storage medium" refers, for example, to both machine-storage media and transmission media. Thus, the terms include both storage devices/media and carrier waves/modulated data signals. The terms "machine-readable medium," "computer-readable medium" and "device-readable medium" mean the same thing and may be used interchangeably in this disclosure.

"Machine storage medium" refers, for example, to a single or multiple storage devices and media (e.g., a centralized or distributed database, and associated caches and servers) that store executable instructions, routines and data. The term shall accordingly be taken to include, but not be limited to, solid-state memories, and optical and magnetic media, including memory internal or external to processors. Specific examples of machine-storage media, computer-storage media and device-storage media include non-volatile memory, including by way of example semiconductor memory devices, e.g., erasable programmable read-only memory (EPROM), electrically erasable programmable read-only memory (EEPROM), FPGA, and flash memory devices; magnetic disks such as internal hard disks and removable disks; magnetooptical disks; and CD-ROM and DVD-ROM disks The terms "machine-storage medium," "device-storage medium," "computer-storage medium" mean the same thing and may be used interchangeably in this disclosure. The terms "machine-storage media," "computer-storage media," and "device-storage media" specifically exclude carrier waves, modulated data signals, and other such media, at least some of which are covered under the term "signal medium."

"Non-transitory computer-readable storage medium" refers, for example, to a tangible medium that is capable of storing, encoding, or carrying the instructions for execution by a machine.

"Signal medium" refers, for example, to any intangible medium that is capable of storing, encoding, or carrying the instructions for execution by a machine and includes digital or analog communications signals or other intangible media to facilitate communication of software or data. The term "signal medium" shall be taken to include any form of a modulated data signal, carrier wave, and so forth. The term "modulated data signal" means a signal that has one or more of its characteristics set or changed in such a matter as to encode information in the signal. The terms "transmission medium" and "signal medium" mean the same thing and may be used interchangeably in this disclosure.

"User device" refers, for example, to a device accessed, controlled or owned by a user and with which the user interacts perform an action, or an interaction with other users or computer systems.

Further examples are set out in the clauses below:
1. A system, comprising:
   a biasing apparatus configured to apply a closing force to a movable member, the closing force biasing the movable member toward a closed position in which the movable member is in proximity to a stationary member;
   an electromagnet configured to, in response to an electrical stimulus, apply a damping force opposing the closing force, the damping force having a magnitude based on a magnitude of the electrical stimulus;
   a sensor configured to generate position information indicative of a position of the movable member; and
   a controller configured to apply the electrical stimulus to the electromagnet based on the position information to decelerate the movable member before the movable member reaches the closed position.
2. The system of clause 1, wherein:
   the biasing apparatus comprises a permanent magnet.
3. The system of clause 1 or 2, wherein:
   the stationary member comprises a storage compartment defining an opening, the storage compartment having a door;
   the movable member comprises the door of the storage compartment; and
   wherein the movable member is configured to rotate to the closed position, the closed position comprising the movable member closing the opening of the storage compartment.
4. The system of clause 3, further comprising:
   a vehicle comprising the storage compartment;
   wherein:
      the electrical stimulus is supplied by an electrical system of the vehicle; and
      the controller is a controller of the vehicle.
5. The system of any one of the preceding clauses, wherein:
   the sensor comprises a potentiometer; and
   the position information is indicative of the position of the movable member as selected from more than two possible positions.
6. The system of clause 5, wherein:
   the controller is configured to modulate the magnitude of the electrical stimulus based on the position information according to a damping profile, the damping profile comprising:
   an attack phase comprising a first magnitude of the damping force applied to the movable member based on the movable member being determined to be moving toward the closed position above a velocity threshold;
   a sustain phase following the attack phase, comprising a second magnitude of the damping force, less than the first magnitude, applied to the movable member based on the movable member being determined to be moving below the velocity threshold; and
   a release phase following the sustain phase, comprising a third magnitude of the damping force, less than the second magnitude, applied to the movable member based on the movable member being determined to be in the closed position.
7. The system of any one of the preceding clauses, wherein:
   the sensor comprises a mechanical switch; and
   the position information is indicative of whether the movable member is within a switch distance of the closed position.
8. The system of any one of the preceding clauses, wherein:
   a ratio of the magnitude of the damping force applied to the movable member to a magnitude of the closing force applied to the movable member is greater at a first position of the movable member than at a second position of the movable member, the first position being farther from the closed position than the second position.
9. The system of clause 8, wherein:
   the biasing apparatus comprises a permanent magnet; and
   the permanent magnet generates a first magnetic field that attenuates over a shorter distance than a second magnetic field generated by the electromagnet.
10. The system of clause 9, wherein:
   the controller is configured to apply the electrical stimulus to the electromagnet in response to determining, based on the position information, that the movable member is within a damping distance of the closed position.
11. The system of clause 10, wherein:
   the controller is configured to cease applying the electrical stimulus to the electromagnet in response to determining, based on the position information, that the movable member has remained within the damping distance of the closed position for greater than a timeout interval of time.
12. The system of clause 11, wherein:
   the sensor comprises a mechanical switch;
   the position information is indicative of whether the movable member is within a switch distance of the closed position; and
   the damping distance is substantially equal to the switch distance.
13. The system of any one of the preceding clauses, wherein:
   the controller is configured to modulate the magnitude of the electrical stimulus based on the position information based on a damping profile.
14. The system of clause 13, wherein:
   the controller is configured to change the damping profile in response to receiving configuration information.
15. A method, comprising:
   applying, by a biasing apparatus, a closing force to a movable member, the closing force biasing the movable member toward a closed position in which the movable member is in proximity to a stationary member;
   generating, by a sensor, position information indicative of a position of the movable member; and
   applying, by a controller, an electrical stimulus to an electromagnet based on the position information,
   the electromagnet applying a damping force opposing the closing force, the damping force having a magnitude based on a magnitude of the electrical stimulus,
   the damping force applied by the electromagnet decelerating the movable member before the movable member reaches the closed position.
16. The method of clause 15, wherein:
   the biasing apparatus comprises a permanent magnet; and
   the permanent magnet generates a first magnetic field that attenuates over a shorter distance than a second magnetic field generated by the electromagnet, such that a ratio of the magnitude of the damping force applied to the movable member to a magnitude of the closing force applied to the movable member is greater at a first position of the movable member than at a second position of the movable member, the first position being farther from the closed position than the second position.
17. The method of clause 16, wherein:
   the electrical stimulus is applied to the electromagnet in response to determining, based on the position information, that the movable member is within a damping distance of the closed position.
18. The method of clause 17, further comprising:
   ceasing to apply the electrical stimulus to the electromagnet in response to determining, based on the position information, that the movable member has remained within the damping distance of the closed position for greater than a timeout interval of time.
19. The method of clause 18, wherein:
   the sensor comprises a mechanical switch;
   the position information is indicative of whether the movable member is within a switch distance of the closed position; and
   the damping distance is substantially equal to the switch distance.
20. A non-transitory computer-readable medium comprising instructions that, when executed by one or more processors of a system, cause the system to perform operations comprising:
   applying, by a biasing apparatus, a closing force to a movable member, the closing force biasing the movable member toward a closed position in which the movable member is in proximity to a stationary member;
   generating, by a sensor, position information indicative of a position of the movable member; and
   applying, by a controller, an electrical stimulus to an electromagnet based on the position information,
   the electromagnet applying a damping force opposing the closing force, the damping force having a magnitude based on a magnitude of the electrical stimulus,
   the damping force applied by the electromagnet decelerating the movable member before the movable member reaches the closed position.

## Claims

1. A system, comprising:
a biasing apparatus configured to apply a closing force to a movable member, the closing force biasing the movable member toward a closed position in which the movable member is in proximity to a stationary member;
an electromagnet configured to, in response to an electrical stimulus, apply a damping force opposing the closing force, the damping force having a magnitude based on a magnitude of the electrical stimulus;
a sensor configured to generate position information indicative of a position of the movable member; and
a controller configured to apply the electrical stimulus to the electromagnet based on the position information to decelerate the movable member before the movable member reaches the closed position.

2. The system of claim 1, wherein:
the biasing apparatus comprises a permanent magnet.

3. The system of claim 1, wherein:
the stationary member comprises a storage compartment defining an opening, the storage compartment having a door;
the movable member comprises the door of the storage compartment; and
wherein the movable member is configured to rotate to the closed position, the closed position comprising the movable member closing the opening of the storage compartment.

4. The system of claim 2 or 3, further comprising:
a vehicle comprising the storage compartment;
wherein:
the electrical stimulus is supplied by an electrical system of the vehicle; and
the controller is a controller of the vehicle.

5. The system of any one of the preceding claims, wherein:
the sensor comprises a potentiometer; and
the position information is indicative of the position of the movable member as selected from more than two possible positions.

6. The system of claim 5, wherein:
the controller is configured to modulate the magnitude of the electrical stimulus based on the position information according to a damping profile, the damping profile comprising:
an attack phase comprising a first magnitude of the damping force applied to the movable member based on the movable member being determined to be moving toward the closed position above a velocity threshold;
a sustain phase following the attack phase, comprising a second magnitude of the damping force, less than the first magnitude, applied to the movable member based on the movable member being determined to be moving below the velocity threshold; and
a release phase following the sustain phase, comprising a third magnitude of the damping force, less than the second magnitude, applied to the movable member based on the movable member being determined to be in the closed position.

7. The system of any one of the preceding claims, wherein:
the sensor comprises a mechanical switch; and
the position information is indicative of whether the movable member is within a switch distance of the closed position.

8. The system of any one of the preceding claims, wherein:
a ratio of the magnitude of the damping force applied to the movable member to a magnitude of the closing force applied to the movable member is greater at a first position of the movable member than at a second position of the movable member, the first position being farther from the closed position than the second position.

9. The system of claim 8, wherein:
the biasing apparatus comprises a permanent magnet; and
the permanent magnet generates a first magnetic field that attenuates over a shorter distance than a second magnetic field generated by the electromagnet.

10. The system of claim 9, wherein:
the controller is configured to apply the electrical stimulus to the electromagnet in response to determining, based on the position information, that the movable member is within a damping distance of the closed position.

11. The system of claim 10, wherein:
the controller is configured to cease applying the electrical stimulus to the electromagnet in response to determining, based on the position information, that the movable member has remained within the damping distance of the closed position for greater than a timeout interval of time; and optionally wherein:
the sensor comprises a mechanical switch;
the position information is indicative of whether the movable member is within a switch distance of the closed position; and
the damping distance is substantially equal to the switch distance.

12. The system of any one of the preceding claims, wherein:
the controller is configured to modulate the magnitude of the electrical stimulus based on the position information based on a damping profile; and optionally wherein:
the controller is configured to change the damping profile in response to receiving configuration information.

13. A method, comprising:
applying, by a biasing apparatus, a closing force to a movable member, the closing force biasing the movable member toward a closed position in which the movable member is in proximity to a stationary member;
generating, by a sensor, position information indicative of a position of the movable member; and
applying, by a controller, an electrical stimulus to an electromagnet based on the position information,
the electromagnet applying a damping force opposing the closing force, the damping force having a magnitude based on a magnitude of the electrical stimulus,
the damping force applied by the electromagnet decelerating the movable member before the movable member reaches the closed position.

14. The method of claim 13, wherein:
the biasing apparatus comprises a permanent magnet; and
the permanent magnet generates a first magnetic field that attenuates over a shorter distance than a second magnetic field generated by the electromagnet, such that a ratio of the magnitude of the damping force applied to the movable member to a magnitude of the closing force applied to the movable member is greater at a first position of the movable member than at a second position of the movable member, the first position being farther from the closed position than the second position; and optionally wherein:
the electrical stimulus is applied to the electromagnet in response to determining, based on the position information, that the movable member is within a damping distance of the closed position; and optionally further comprising:
ceasing to apply the electrical stimulus to the electromagnet in response to determining, based on the position information, that the movable member has remained within the damping distance of the closed position for greater than a timeout interval of time; and optionally wherein:
the sensor comprises a mechanical switch;
the position information is indicative of whether the movable member is within a switch distance of the closed position; and
the damping distance is substantially equal to the switch distance.

15. A computer-readable medium comprising instructions that, when executed by one or more processors of a system, cause the system to perform operations comprising:
applying, by a biasing apparatus, a closing force to a movable member, the closing force biasing the movable member toward a closed position in which the movable member is in proximity to a stationary member;
generating, by a sensor, position information indicative of a position of the movable member; and
applying, by a controller, an electrical stimulus to an electromagnet based on the position information,
the electromagnet applying a damping force opposing the closing force, the damping force having a magnitude based on a magnitude of the electrical stimulus,
the damping force applied by the electromagnet decelerating the movable member before the movable member reaches the closed position.
